# EUROPEAN PATENT SPECIFICATION

(11) **EP 3 167 116 B1**
(45) Date of publication and mention of the grant of the patent: **06.12.2017**
(21) Application number: 15735961.3
(22) Date of filing: 09.07.2015
(51) Int. Cl.: D21F 9/00, D21G 9/00

(54) **TURBINE CONTROL SYSTEMS FOR ENERGY RECOVERY FROM STOCK MOMENTUM**
TURBINENSTEUERUNGSSYSTEME ZUR ENERGIERÜCKGEWINNUNG AUS BESTANDSDYNAMIK
SYSTÈMES DE COMMANDE DE TURBINE POUR RÉCUPÉRATION D'ÉNERGIE À PARTIR DU MOMENT DU STOCK

(30) Priority: 09.07.2014 SE 1450882
(43) Date of publication of application: 17.05.2017
(73) Proprietor: Valmet Aktiebolag, 851 94 Sundsvall (SE)
(72) Inventor: JOHANSSON, Arvid, S-653 49 Karlstad (SE); ELG, Sören, S-681 30 Kristinehamn (SE); BENGTSSON, Per-Inge, S-653 48 Karlstad (SE)
(74) Representative: Johansson, Lars E.
(86) International application number: PCT/EP2015/065755
(87) International publication number: WO 2016/005523

(56) References cited:
- WO-A1-01/44564

## Description

### BACKGROUND

### 1. Technical Field

The present invention relates generally to recovering energy used during the fabrication of paper products.

### 2. Description of Related Art

Paper, tissue, board, and other cellulose-based products are often fabricated from a suspension (*e.g.,* of cellulose in water, hereinafter: stock). A headbox may inject stock between a loop of forming wire (*e.g.,* a porous wire mesh or cloth) driven around a lead roll, and a loop of fabric (*e.g.,* a fabric or another forming wire), which is typically driven around a forming roll. Forces applied to the stock (*e.g.,* via the headbox, the forming wire, the fabric, or the rolls) cause the water to pass through the forming wire to form a web of cellulose between the forming wire and fabric.

Large amounts of high-velocity water are ejected from the stock as it passes through the forming wire. Recovery of energy from this stock may improve the efficiency of papermaking. US patent no. 6,398,913 and WO 01/44564A1 describe an arrangement and method for recovery of energy in a paper machine forming section, in which kinetic energy imparted to the stock is recovered via a turbine that drives a generator. Improving the reliability and/or efficiency of an energy recovery apparatus may reduce the overall cost of ownership and decrease energy consumption during papermaking.

### SUMMARY OF THE INVENTION

Kinetic energy imparted to stock in the forming section of a papermaking machine may be recovered using an apparatus for recovering energy. An energy recovery apparatus may comprise a turbine (*e.g.,* a Banki, a Kaplan, a Francis, or a Pelton, turbine). The turbine may be coupled to an electric motor, which may be operated as a motor at a first time, and as a generator at a second time. As water is ejected through the forming wire, it may be guided to the turbine using a guide plate. Ejected water may cause the turbine to spin, driving the motor to generate electrical power.

A power control system (PCS) may be configured to control the speed of the motor (and by extension, the turbine) by controlling the flow of electrical power between an electrical sink/source and the motor. The PCS may control the flow of power with a frequency converter (*e.g.,* when using an alternating current (A/C) motor). The PCS may control the flow of power with a power converter (*e.g.,* when using a direct current (D/C) motor). Some embodiments include an inverter to convert between A/C and D/C power.

The motor may be controlled (*e.g.,* by varying a load driven by the motor) such that the turbine spins the motor at a specific rpm at which it efficiently generates electrical power. The mechanical transfer of momentum from the filtered stock to the turbine may be maximized by controlling the tangential velocity of the turbine to be a desired fraction of the velocity of the filtered stock impinging upon the turbine. The turbine may be controlled to spin at a desired fraction of the speed of the "jet" of stock exiting the headbox, which may be a function of the headbox pressure and exit dimensions. In some cases, the turbine may be controlled to spin at a desired fraction of the speed of the forming roll (*e.g.,* to achieve a particular tangential velocity of the turbine with respect to that of the forming roll). A power control system may be configured to control a tangential velocity of the turbine to be between about 20-70%, including 30-60%, including 35-50% of the jet velocity.

By designing the system such that the motor spins at an electrically efficient rpm when the turbine blades move at a mechanically efficient speed with respect to the incoming jet, total efficiency of power conversion (from injected stock to electrical current at the sink/source) may be maximized.

In some embodiments, an appropriate combination of motor parameters (specified speed, number of poles), geometrical factors (forming roll diameter, turbine diameter, gearing between turbine and motor) and process factors (forming roll tangential velocity, turbine tangential velocity, stock injection velocity, stock volume flow rate, and the like) may be designed in concert to maximize efficiency and reliability. This combination may result in the motor spinning at an electrically efficient rpm, while the turbine spins at a tangential velocity that maximizes the transfer of momentum from the impinging water to the turbine. Preferably, various parameters (*e.g.,* gearing between turbine and motor, turbine diameter, and the like, or even designs that eliminate the need for gearing) are chosen such that the motor spins at the rpm for which it was designed (to operate as a motor) when the turbine spins at a tangential velocity that is near 50% (*e.g.,* +/- 5%, such as 40%-50%) of the velocity of the white water entering the turbine. The power control system may ensure that, during operation, the various speeds are kept at their optimal values.

By using a motor as a generator, controlling the motor to spin at a desired rpm at which efficiency is high, and designing the system such that the turbine spins at a mechanically efficient rpm when the motor is also operating at an electrically efficient rpm, total power conversion efficiency may be maximized. Controlling rpm of the motor (while operating it as a generator) may enable the use of a device designed to be an electric motor (rather than a device designed to be a generator *per se*). Such a system may provide high efficiency, and may be implemented at lower total cost than prior systems. Customer adoption rates may be improved by using a motor, rather than a generator. An electrical motor may have a desired motor rpm, particularly an rpm at which its efficiency of generation of electricity is near, preferably at, a maximum. The turbine and motor may be configured (e.g., with turbine diameter, jet velocity, forming roll velocity, coupling between turbine and motor, and the like) such that, when the tangential velocity of the turbine is between about 20-70%, including 30-60%, including 35-50%, of the jet velocity, the electrical motor spins at an rpm that is within 30%, including 20%, particularly 10%, including 5%, of the desired motor rpm. A desired motor rpm may be a standardized operating speed of the motor. A power control system may be configured to control the speed of the motor such that a deviation between the actual motor rpm and a desired motor rpm (e.g., the standardized operating speed) does not exceed 20%, including 10%, including 5%, of the desired motor rpm. In some embodiments, the jet velocity is about 13-40 m/s, particularly 17-37 m/s, particularly 23-36 m/s. A method may comprise controlling a tangential velocity of the turbine according to an incoming velocity of a whitewater stream impinging on the turbine to maximize efficiency of energy recovery, and particularly maintaining a tangential velocity of the turbine to be between about 30% and 60% of the incoming velocity of the whitewater stream. The incoming velocity may be between about 70%-90%, including 75%-85%, including about 77%-83% a jet velocity of water injected by the headbox and/or a tangential velocity of the forming roll.

Typically, computer aided design (CAD) and modeling (e.g., FEM) tools may be used to simulate operation, such that incoming whitewater velocity (from the forming wire, into the turbine) may be predicted. Whitewater velocity may typically be between 70% and 90%, including 75% and 85%, including 78% and 82% of the jet velocity. Based on a predicted incoming whitewater velocity, a predicted turbine speed (according to that whitewater velocity), and the resulting efficiency of energy recovery, an apparatus may be designed (e.g., turbine radius chosen) to have an optimal energy recovery. In some cases, fine adjustments in turbine velocity (e.g., via control of motor speed) may be made (in concert with power from turbine measurements) to "fine tune" the energy recovery (e.g., maximizing the efficiency of energy harvesting). In an embodiment, the headbox injects the stock at a jet velocity that is between about 25 and 34 m/s, including about 27 and 32 m/s. In an embodiment, the headbox injects the stock at a jet velocity that is between about 13 and 40 m/s, including about 17 and 37 m/s, including about 23 and 36 m/s. A power control system may be configured to control a tangential velocity of the turbine to be between about 20-70%, including 30-60%, including 35-50% of the jet velocity. A power control system may be configured to control a tangential velocity of the turbine to be between about 9 and 15 m/s, including about 10 and 14 m/s, including about 11 and 13 m/s.

In some cases, the motor may be driven to "spin up" the turbine prior to use (*e.g.,* prior to injecting stock from the headbox) which may reduce damage and/or wear on the turbine. The motor may be controlled to adjust turbine speed in response to vibration (*e.g.,* from a vibration sensor), speeding up or slowing down the turbine if a component is vibrating, resonating, or otherwise in danger of being damaged at a particular speed.

Certain embodiments comprise a turbine coupled to a motor configured to drive the turbine (*e.g.,* to start up the turbine). A power control system coupled to an electrical sink/source controls a flow of electrical power to the motor, which drives the turbine. Some embodiments include a sensor; some embodiments do not include a sensor.

Various aspects provide for an apparatus for recovering energy from a forming section of a papermaking machine. The papermaking machine may comprise a forming wire loop driven around a lead roll, a fabric loop driven around a forming roll, and a headbox configured to inject a stock into a moving sandwich created by the forming wire and fabric loops. The apparatus may comprise a turbine coupled (*e.g.,* via an axle, a chain, a belt, a gear, and the like) to a motor. During operation, a guide plate may direct water ejected through the forming wire into the turbine, causing the motor to generate electricity.

A power control system (PCS) coupled to the sink/source and the motor may be configured to control the speed of the turbine by regulating a flow of power between the sink/source and the motor. The motor may be configured to, at a first time, drive the turbine using electrical power from a sink/source, and at a second time, to send power generated by the turbine to sink/source. In some cases, control may comprise closed loop control using one or more sensors configured to sense the speed of the turbine and/or the speed of the forming roll. The speed of the turbine may be controlled to correlate with a particular speed of the incoming jet of water, which may be correlated with a tangential velocity of the forming roll and/or a jet velocity of the injected stock. In some embodiments, the PCS comprises one or more frequency converters, which may control the motor speed by converting the frequency of power flowing between the sink/source and the motor. The PCS may comprise a power converter to control power flow between the sink/source and the motor.

A papermaking machine may comprise a forming section and an energy recovery apparatus as described herein. A method may comprise closed-loop control of turbine speed, in which sensor information (*e.g.,* sensing turbine speed, motor speed, frequency, roll speed, jet velocity, and the like) is used to constantly monitor turbine speed. The measured turbine speed may be compared to a desired turbine speed, and a deviation between measured and desired speeds may induce an adjustment in turbine speed (*e.g.,* by changing an amount of power flowing between the motor and the sink/source, including changing frequency using a frequency converter controlling the motor).

The present description claims the priority benefit and incorporates by reference Swedish patent application no. 1450882-4, filed July 9, 2014, entitled "Turbine Control Systems for Energy Recovery from Stock Momentum."

### BRIEF DESCRIPTION OF THE DRAWINGS

FIG. 1 illustrates an implementation of an energy recovery apparatus, according to some embodiments.
FIG. 2a is a schematic illustration of various details of an energy recovery apparatus, according to some embodiments.

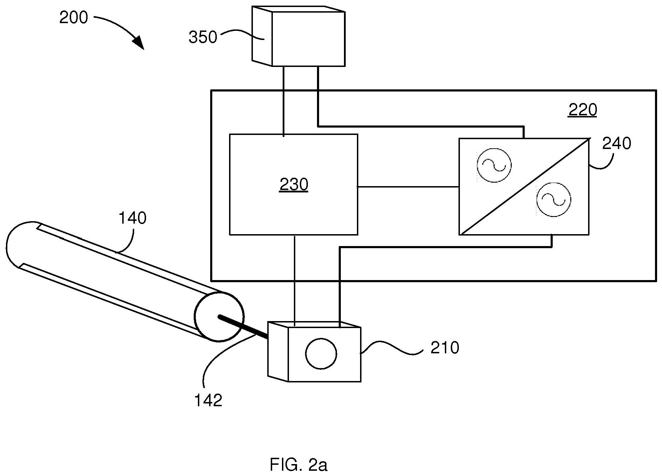

FIG. 2a illustrates an energy recovery apparatus 200 having an A/C motor and a sink/source comprising an A/C line, according to some embodiments.

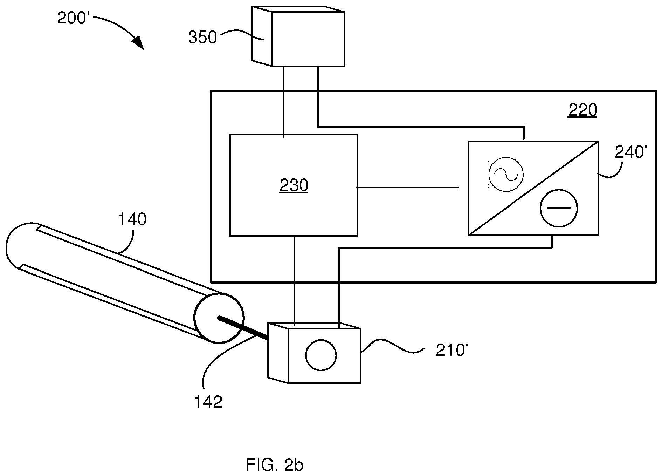

FIG. 2b illustrates an energy recovery apparatus 200' having a D/C motor and a sink/source comprising an A/C line, according to some embodiments.

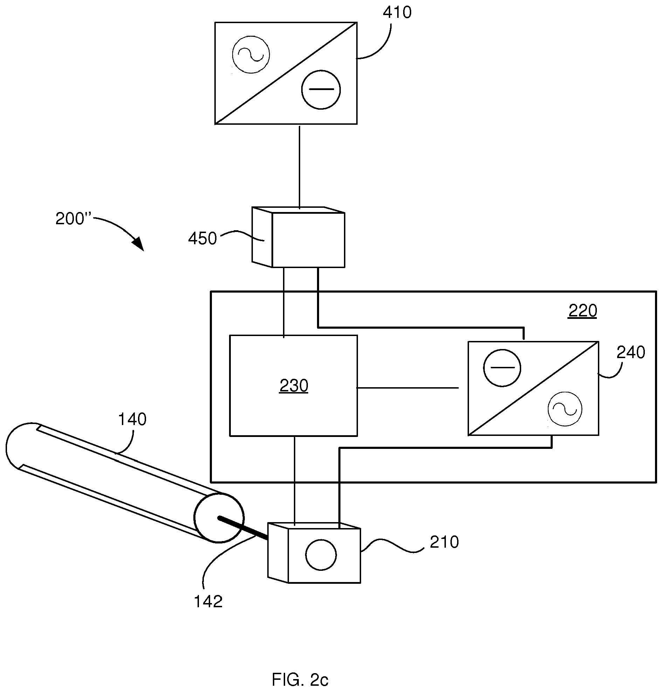

FIG. 2c illustrates an energy recovery apparatus 200" having an A/C motor and a sink/source comprising a D/C line, according to some embodiments.

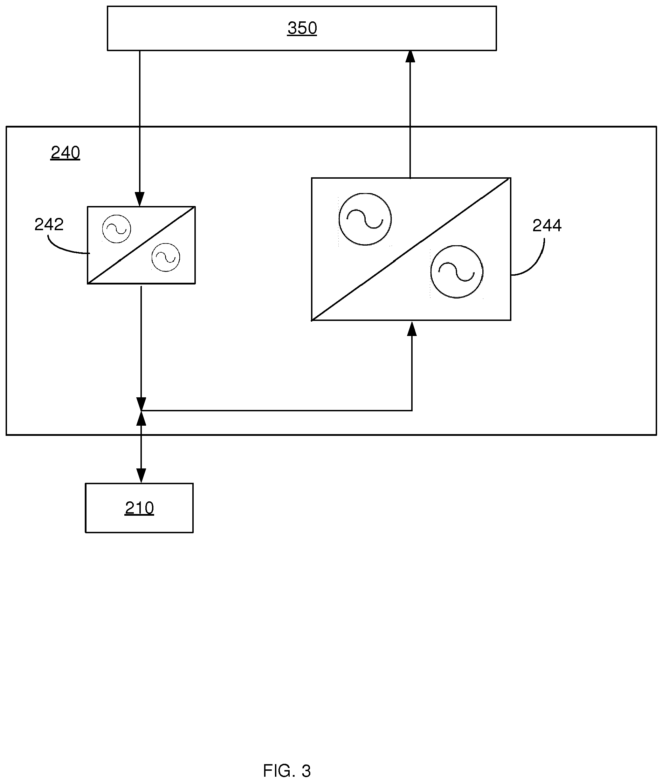

FIG. 3 is a schematic illustration of an implementation of a power control system comprising a frequency converter, according to some embodiments.

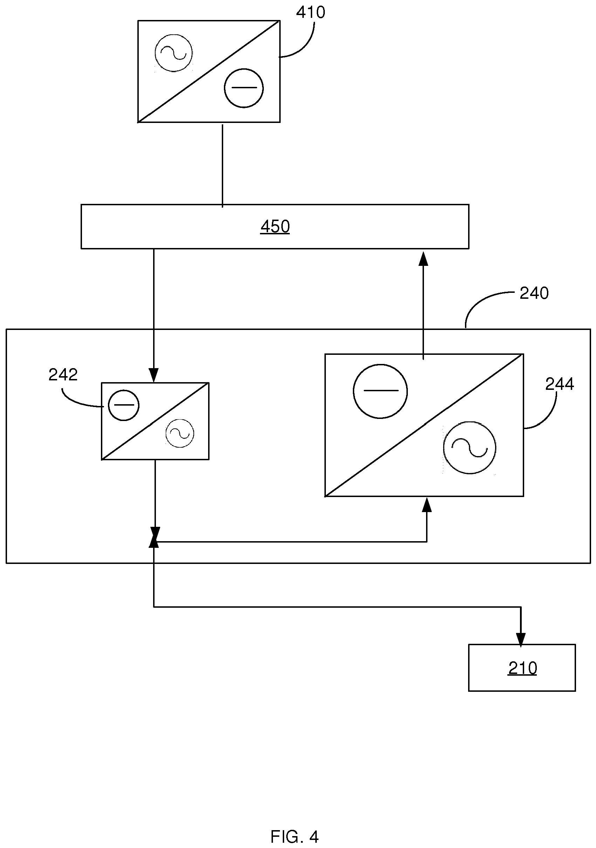

FIG. 4 is a schematic illustration of an implementation of a power control system comprising two frequency converters, according to some embodiments.

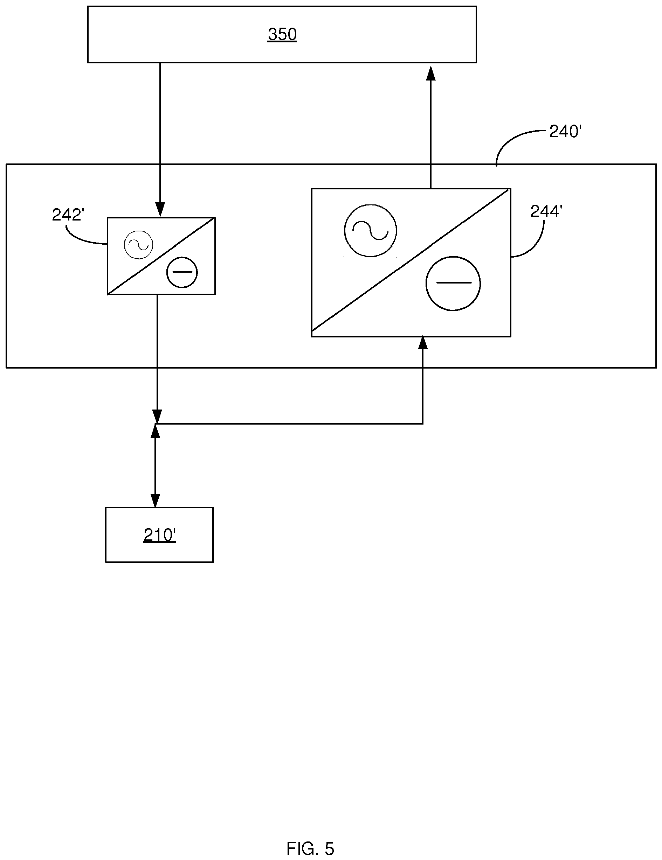

FIG. 5 is a schematic illustration of an implementation of a power control system comprising a D/C motor, according to some embodiments.

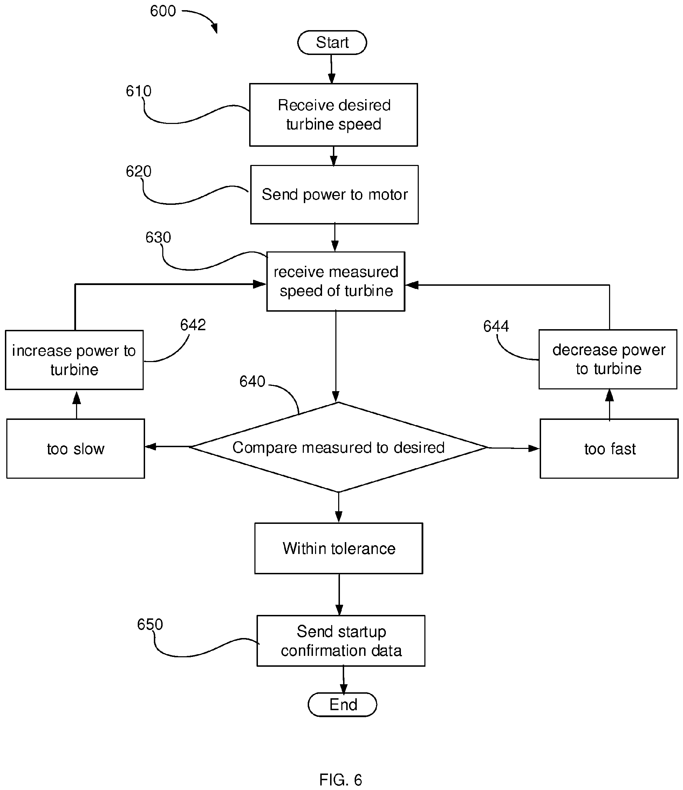

FIG. 6 illustrates a method for spinning up a turbine, according to some embodiments.

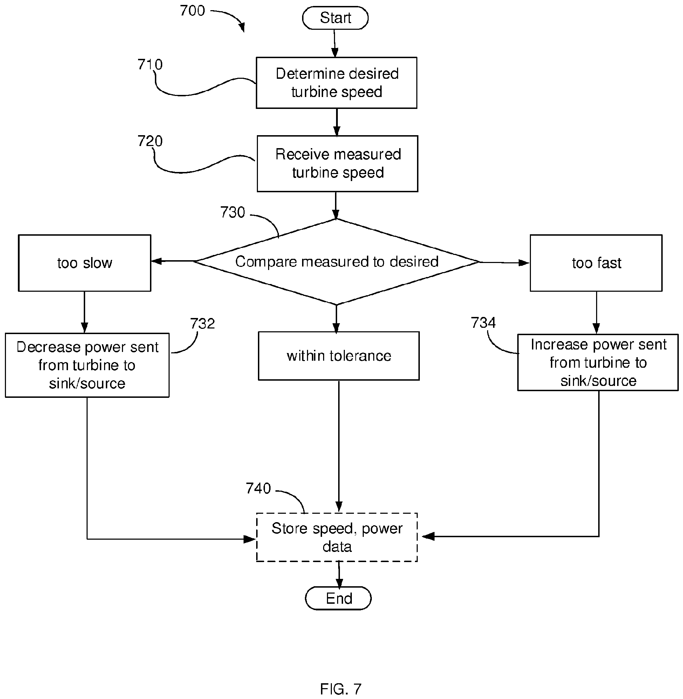

FIG. 7 illustrates a method for controlling a turbine, according to some embodiments.

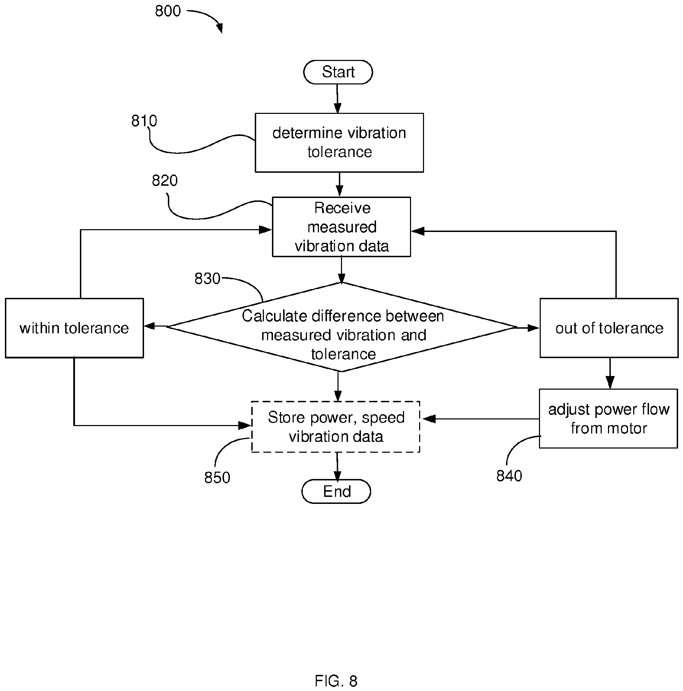

FIG. 8 illustrates a method for adjusting a turbine to reduce vibration, according to some embodiments.

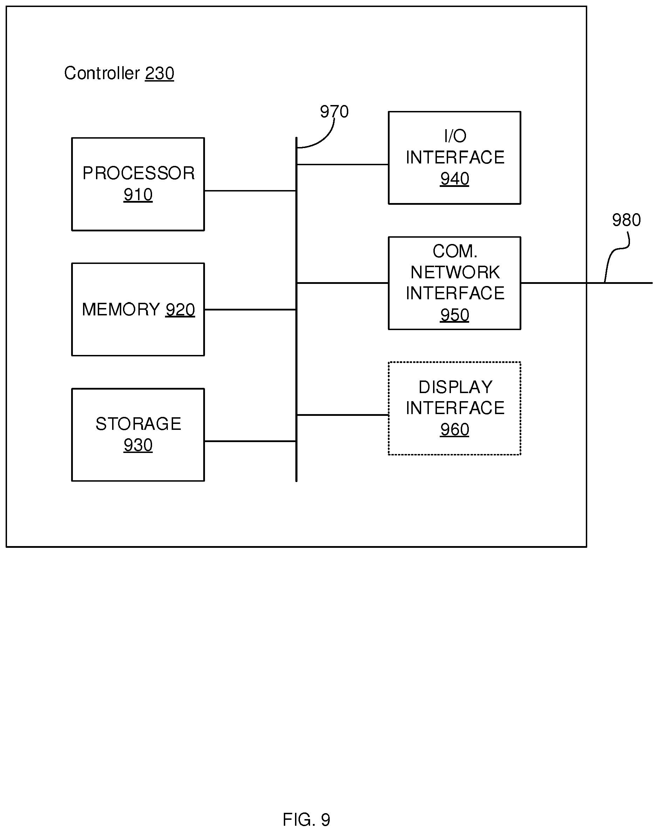

FIG. 9 is a schematic illustration of a controller, according to some embodiments.

### DETAILED DESCRIPTION OF THE INVENTION

Systems and methods described herein may enable the recovery of energy during papermaking and/or other processes in which kinetic energy is imparted to a fluid. Kinetic energy imparted to stock during papermaking may be recovered with a turbine coupled to an electrical motor. After water is ejected through the forming wire, a guide plate may guide the water to the turbine, where the water spins the turbine, spinning the motor to generate electrical power, which flows to a sink/source via a power control system.

The power control system may control the flow of electrical power between the sink/source and the motor. Such control may improve reliability of the turbine and/or increase the efficiency of energy conversion and transfer (from the filtered stock to the sink/source). Certain embodiments of the power electronics may provide for reduced cost as compared to prior art. Some power control systems include a frequency converter, which may be used to control the speed of the motor via a conversion of frequencies between the motor and the sink/source.

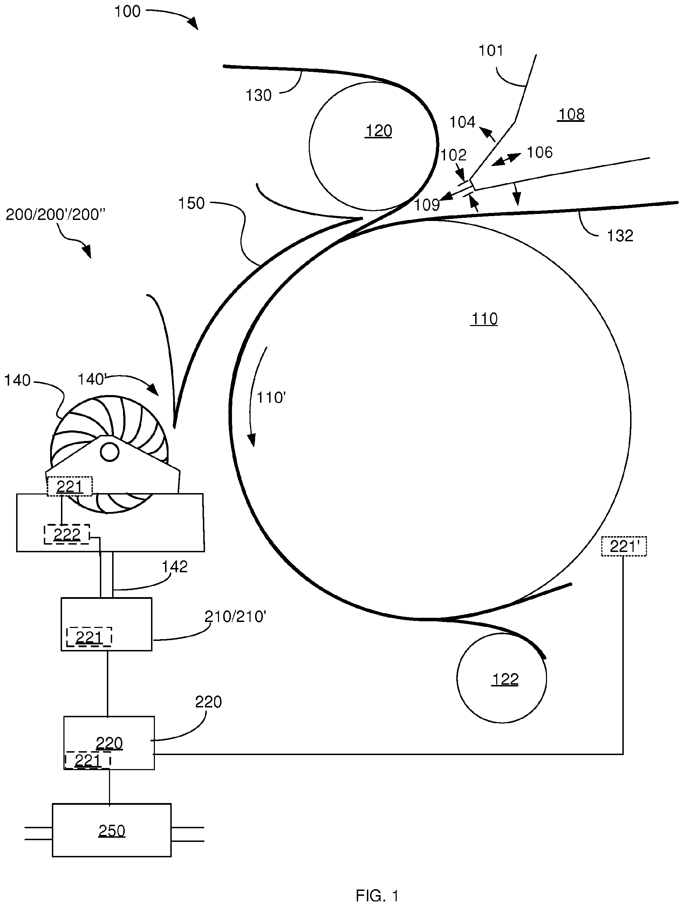

FIG. 1 illustrates an implementation of an energy recovery apparatus, according to some embodiments. FIG. 1 illustrates a forming section of a papermaking machine 100 having an energy recovery apparatus 200/200'/200". For the purposes of this specification, papermaking machine 100 may also be a machine for fabricating tissue, board, and/or other products fabricated by the extraction of a liquid (*e.g.,* water) from a suspension of particles (*e.g.,* cellullose) dispersed in the liquid.

Exemplary papermaking machine 100 may include a headbox 101 configured to receive and inject stock 108 at a jet velocity 109. A forming roll 110 may guide a forming fabric, felt, or mesh, described herein as fabric 132. Some forming rolls have a diameter between 200 and 2500 mm, including between 500 and 2000 mm, including between 700 and 1700 mm. A forming roll may have a diameter between 1000 and 1900 mm. A lead roll 120 may guide a forming wire 130. Forming wire 130 and fabric 132 are typically disposed as loops, coming together to form a continuous "sandwich" of moving loops of forming wire 130 and fabric 132, into which headbox 101 injects stock 108. As the sandwich moves around forming roll 110, fluid from the suspension (*e.g.,* water) is ejected from the sandwiched stock, leaving a web (*e.g.,* a cellulose web) between the forming wire 130 and fabric 132. The sandwich may be separated at lead roll 122, after which the web of dewatered stock may be further processed.

An apparatus 200/200'/200" for recovering energy from the papermaking machine may comprise a turbine 140 coupled to an electrical motor. The turbine and motor may be coupled via a coupling (e.g., with a rigid shaft, a flexible coupling, a driveshaft, a CV joint, a universal joint, a Cardan shaft, and the like). The turbine and motor may be coupled via a chain, a belt, and the like. The turbine and motor may be coupled via a gearbox. In an embodiment, the motor and turbine are configured and coupled without a gearbox between them. An energy recovery apparatus may be implemented using an A/C motor 210, and/or a D/C motor 210'. Sink/source 250 may comprise an A/C line (or buss) (*e.g.,* sink/source 350 in FIG. 2a). Sink/source 250 may comprise a DC line (or buss) (*e.g.,* sink/source 450 in FIG. 2c). In some embodiments, a line may electrically couple a plurality or group of components (e.g., providing power to several motors). The turbine and motor may be coupled via a coupling 142 (e.g., a belt, a chain, an axle, and the like). The coupling may comprise a gearbox. The coupling may cause the motor and turbine to spin at the same rpm and/or not include a gearbox (e.g., if such a configuration increases efficiency). An electrical sink/source 250 may be a source of electrical power or a sink for electrical power (*e.g.,* a load).

A power control system (PCS) 220 may be coupled to the sink/source and the motor, and configured to control the speed of the turbine by regulating a flow of electrical power between the sink/source and the motor. PCS 220 may be configured to drive the motor using power from the sink source (*e.g.,* to spin up the turbine during startup). PCS 220 may be configured to send power generated by the turbine (via the motor) to the sink/source (*e.g.,* when the forming roll is running and the headbox is injecting stock).

Typically, PCS 220 may be coupled to one or more sensors 221 configured to provide speed data used to control the turbine speed. Speed data may comprise a measured and/or estimated speed of incoming white water, which may be associated with jet velocity 109. Sensor 221 may sense jet velocity 109. Sensor 221 may sense a speed (preferably at least one of an rpm and a tangential velocity) of a turbine, a motor, a roll, and the like. A sensor may comprise an encoder. PCS 220 may include a sensor 221 (*e.g.,* as part of a frequency converter and/or power converter). A motor may include a sensor 221 (*e.g.,* a speed sensor, a vibration sensor, a current sensor, a voltage sensor, a thermocouple, and the like).

PCS 220 may regulate power flow between the motor and sink/source such that motor 210 (and thus turbine 140) operates at a desired speed. PCS 220 preferably includes and/or is coupled to a controller configured to control the speed of turbine 140 using closed loop control of the motor, comparing measured speed data to a desired speed and adjusting when these values differ by an amount greater than a tolerance on this difference.

Motor 210/210' may comprise a "normal" electromagnetic motor (*e.g.,* having a field coil or field winding that is electrically magnetized). Motor 210 may comprise a permanent magnet motor. Motor 210/210' may include an alternating current (A/C) motor 210 or a direct current (D/C) motor 210'. The use of a motor (as opposed to a generator) as described herein may provide one or more advantages. While (in theory) a motor may be operated as a generator (and *vice versa*), in practice, a generator performs poorly as a motor, and a motor typically performs poorly as a generator. However, an unexpected and useful result in some embodiments is that a motor having a specified operating speed (*e.g.,* a 1500 rpm motor) may generate electricity efficiently when "driven" at that particular speed (*e.g.,* by turbine 140). PCS 220 may ensure that the motor operates at its most efficient speed for power conversion.

During operation, PCS 220 may control the speed of motor 210/210' by controlling the flow of power from the motor to sink/source 250. Motor speed (and thus turbine speed) may be controlled using closed loop control comprising one or more sensors, such that the turbine operates at desired number of rotations per minute (rpm), preferably wherein a tolerance on the controlled rpm is below 10%, preferably below 5%, preferably below 3%, preferably below 1%, preferably below 0.5%, preferably below 0.1% of the desired rpm. If motor 210/210' is spinning too slowly, the flow of power to sink/source 250 may be reduced. If motor 210/210' is spinning too quickly, the flow of power to sink/source 250 may be increased. By controlling motor 210/210' to spin (as a generator) at its specified speed (as defined for its operation as a motor) efficiency may be high. As such, motor 210/210' may offer the electrical efficiency of a generator while still providing the benefits (*e.g.,* speed control, cost, reliability, and the like) of being a motor.

It may be advantageous to choose the number of poles of the motor (defining the operating rpm) to minimize (preferably eliminate) the need for a speed-changing gearbox between the turbine and the motor (*e*.*g*., such that the turbine rpm is as close as possible to the motor rpm). In some cases, a standard "off the shelf" motor may be used, wherein the motor has a number of poles resulting in a standardized operating speed that is one of 3000, 1500, 1000, 750, 600, 500, 430 and 375 rpm. The operating speed may be chosen according to an expected turbine rpm. Turbine radius, the coupling (*e.g.,* gearing) between the turbine and motor, and the specified motor speed (the standard operating speed of the motor when operated as a motor) may be designed together, such that the turbine's tangential velocity is a desired fraction of an expected incoming velocity of filtered stock (*e.g.,* white water). In some cases, this incoming velocity is at or near jet velocity 109 (e.g., between about 13-40 m/s, particularly 17-37 m/s, particularly 23-36 m/s). This incoming velocity may be at or near (e.g., within 10%, including within 5%, including within 2%) of a tangential velocity 110' of forming roll 110. In many machines, forming roll tangential velocity is slightly faster than jet velocity. In certain machines it may be slightly slower. Typically, the forming roll velocity is slightly higher than the jet velocity. While the physical interaction between the stock and the forming wire may decelerate the injected stock (as it is filtered by the forming wire), a faster forming roll velocity may also accelerate the whitewater (relative to its speed if the forming wire and jet velocities were the same). For example, a tangential velocity 110' of the forming roll may be 20 to 200 m/minute faster than jet velocity 109, including 30 to 160 m/minute, including 50 to 140 m/minute faster. In some cases a jet velocity may be about 90%-100%, including 94% to 99% of the forming roll tangential velocity.

Typically, an expected (incoming whitewater) velocity is used to size the turbine, the motor, and the coupling between them. In an exemplary embodiment, turbine and motor are chosen (along with an expected set of papermaking machine operating conditions) such that during operation, the motor rpm matches its standard rpm when the tangential velocity of the turbine is 20-70%, including 30-60%, including 40-50%, including 42-49%, including 44-48% or 41%-47%, of the velocity of the incoming water. An expected velocity of water entering the turbine may be between 10 and 50 m/s, including between 15 and 40 m/s, including between 20 and 30 m/s. In some machines, an expected velocity of incoming white water is between 23 and 33 m/s. Incoming whitewater velocity may be about 70%-90%, including 75%-85%, including 78-82% of the jet velocity. In some embodiments, tangential velocity of the turbine is controlled to be between about 4 and 24 m/s, including 5 and 21 m/s, including 6 and 18 m/s. In some cases, an apparatus may be "dialed in" to a particular operating condition at installation (e.g., adjusting the PCS to control actual turbine speed to be that speed which maximizes energy recovery, subject to not degrading paper production rates, quality, and the like).

In an implementation, various components (e.g., turbine, motor) are designed such that, when the turbine spins at a desired rpm (e.g., with a tangential velocity that is a desired fraction of the jet velocity) the motor spins at an efficient rpm (e.g., a standardized rpm). An exemplary range of jet velocities may be between about 12-47 m/s, particularly 13-45 m/s, particularly 14-40 m/s. An exemplary tangential velocity (periphery speed) of a turbine may be between about 6 and 20 m/s, including about 10 and 17 m/s, including about 11 and 16 m/s, including about 12 and 14 m/s. For example, in a machine with a jet velocity of about 30 m/s, a turbine and motor may be designed together (e.g., with turbine diameter and motor rpm) such that, when the turbine has a tangential velocity of about 14 m/s, the motor spins at 1500 rpm.

The optimization of energy recovery parameters (e.g., turbine diameter, motor operating speed) according to forming conditions (e.g., headbox velocity, forming roll tangential velocity) may be subject to "real world" manufacturing constraints. For example, a manufacturing tolerance on turbine diameter may be up to 5mm (e.g., on a 600 mm turbine) at one time, but later improve to 2mm (or even 1mm). In small lots, only "off the shelf" motors having pre-defined rpm may be available. For larger purchases, custom motors having a "standard" rpm that is defined by the energy recovery apparatus may be available. A permanent magnet motor may lose relatively less efficiency as rpm deviates from the standard rpm (and thus be better for "sub optimal" rpm installations). For systems in which motor rpm may be precisely defined, a different type of motor (offering higher efficiency at its "ideal" rpm but worse efficiency "off-ideal") may be better. In some embodiments, optimization of turbine tangential velocity vs. incoming whitewater velocity (e.g., as related to jet velocity) may take priority over optimizing motor rpm.

### EXAMPLES

The following examples illustrate several representative implementations, in select embodiments (NB, "comma" denotes decimal point). Using readily available motors, challenging (but achievable) manufacturing tolerances, and predictable decreases in the speed of the incoming whitewater (vs. jet and forming roll), the actual motor rpm may be kept within 15% (and in some cases within 10%, or even 5%) of its standardized operating speed. While not shown in this table, significant energy recovery was achieved, notwithstanding that the "ideal" conditions may not exactly have been met.

**TABLE 1**

| Emb. | Forming roll vel. (m/s) | Jet m/s | Turbine dia. (m) | Turbine tangent. Vel. (m/s) | Turbine RPM (actual) | RPM deviation (%) 14-pole asynch. motor, standardized op. =428 rpm (desired-actual)/actual | RPM deviation (%) Permanent magn.motor, standardized op. =430 rpm, (desired-actual)/actual |
|---|---|---|---|---|---|---|---|
| 1 | 28,33 | 26,33 | 0,6 | 11,99 | 382 | 12,0% | 12,6% |
| 2 | 31,17 | 30,83 | 0,6 | 13,19 | 420 | 1,9% | 2,4% |
| 3 | 30 | 27,67 | 0,595 | 12,27 | 394 | 8,6% | 9,1% |
| 4 | 30,83 | 28,90 | 0,595 | 12,86 | 413 | 3,6% | 4,1% |

Some embodiments include a forming roll sensor 221' (configured to sense a speed of the forming roll). In an implementation, turbine 140 may be controlled to spin at a desired tangential velocity 140', which may be chosen to correlate with a tangential velocity 110' of forming roll 110 and/or jet velocity 109. The PCS may be further configured receive data from a forming roll sensor configured to measure the speed of the forming roll, and to control the speed of the turbine in relation to the speed of the forming roll, preferably wherein the tangential velocity of the turbine is between 20% and 70%, including between 30% and 60%, including between 40% and 55%, including between 45% and 50%, including at least 46% and not greater than 49%, of at least one of the tangential velocity 110' of the forming roll and a jet velocity 109 of the injected stock 108.

Some embodiments comprise a vibration sensor 222, preferably an accelerometer, configured to sense a vibration (*e.g.,* of the turbine). The PCS may be further configured to adjust the speed of the turbine in response to data received from the vibration sensor. Preferably, vibration of the turbine causes the PCS to speed up the turbine (*e.g.,* by reducing power flow from the motor to the sink/source). Power flow may be reduced by increasing frequency (*e.g.,* with a frequency converter). Adjustment of turbine speed to mitigate vibration may take the apparatus out of a preferred efficiency range, but improve reliability.

The specified rpm of the motor may be chosen in concert with turbine diameter to match a particular forming section. Different papermaking machines may have different operating conditions (*e.g.,* volume of stock/second, stock concentration, fiber type within the stock, % of recycled fiber % (*e.g.,* % of de-inked recycled paper), fiber composition (*e.g.,* birch, fir, spruce, pine, eucalyptus), fiber length, fabric/wire velocity, angular velocities of various rolls, wire type, fabric type, and the like). Different machines may have different geometrical parameters. For example (at a given width machine), headbox exit gap size 102 may vary among machines (*e.g.,* between 2 and 30 mm, including 5-25mm, including 8-20 mm, including 10-15 mm, including 12-13 mm). A position 106 of headbox 101 with respect to the lead and forming rolls (*e.g.,* a distance from the headbox exit gap to the "sandwich" formed by the forming wire and fabric) may vary. A headbox angle 104 may vary. The pressure of stock 108 within headbox 101, the cross sectional area of the headbox exit gap, and stock properties (*e.g.,* concentration, viscosity, fiber type) may be used to define jet velocity 109 of the stock exiting headbox 101. Diameters of forming roll, lead roll, and positions of these two rolls with respect to each other may vary. Jet velocity 109 may be 90%-110%, including 95%-105%, including 98%-102%, including substantially the same as, the velocity of the wire/fabric sandwich (*e.g.,* the tangential velocity of the forming roll).

Variation of these conditions and parameters may change the velocity, position, and/or shape of the water stream (or spray) ejected through forming wire 130. To accommodate differences in these characteristics, PCS 220 may control the speed of turbine 140 (via motor 210) to maximize efficiency and/or minimize damage.

FIGS. 2a-2c are schematic illustrations of various details of an energy recovery apparatus, according to some embodiments. Various combinations of motor (A/C, D/C) and sink/source (A/C, D/C) may be implemented. FIG. 2a illustrates an energy recovery apparatus 200 having an A/C motor and a sink/source comprising an A/C line, according to some embodiments. FIG. 2b illustrates an energy recovery apparatus 200' having a D/C motor and a sink/source comprising an A/C line, according to some embodiments. FIG. 2c illustrates an energy recovery apparatus 200" having an A/C motor and a sink/source comprising a D/C line, according to some embodiments. Other combinations are possible, and discussion associated with these figures is generally applicable.

In FIG. 2a, an apparatus 200 may comprise a representative PCS 220 having a controller 230 and a frequency converter 240 (*e.g.,* for use with an A/C motor 210). Controller 230 may be configured to control frequency converter 240 to adjust a frequency conversion between motor 210 and sink/source 250. In the example shown in FIG. 2a, sink/source 350 comprises an A/C line. Frequency converter 240 may be used to control the speed of motor 210 by regulating current flow between motor 210 and sink/source 350 (*e.g.,* by changing the converted frequency of the electrical power flowing between these components).

Controller 230 may receive data from a sensor (*e.g.,* a sensor 221, 221', a vibration sensor 222, and the like, (FIG. 1) and use these data to control the speed of the turbine. PCS 220 may include a sensor 221, and in some cases, the sensor is integrated with frequency converter 240.

FIG. 2b illustrates an energy recovery apparatus 200' having a D/C motor 210' and a sink/source 350 comprising an A/C line. PCS 220 may comprise a power converter 240'. A power converter may be used to control the speed of a D/C motor (*e.g.,* by controlling power flow to/from the motor). In illustrative FIG. 2b, power converter 240' may convert power flowing between D/C motor 210' and sink/source 350. Power converter 240' may include a sensor (*e.g.,* sensor 221).

FIG. 2c illustrates an energy recovery apparatus 200" having an A/C motor 210 and a sink/source 450 comprising a D/C line. PCS 220 may comprise a frequency converter 240, which may control the speed of A/C motor 210.

In some implementations (*e.g.,* a MULTIDRIVE system as provided by Valmet AB, Karlstad, Sweden), a plurality of D/C loads (*e.g.,* motors associated with a papermaking machine) may be powered by a bus (*e.g.,* a sink/source 450 comprising a D/C bus). An incomer section 410 may comprise a frequency converter configured (for example) to convert A/C grid power to D/C power for sink/source 450. Sink/source 450 may comprise a D/C bus used to power a plurality of D/C components. Incomer section 410 may comprise a regenerating 4 quadrant frequency converter. Some implementations may use a Thyristor Supply Unit (ABB, Switzerland) IGBT, or an Active Front End (Siemens, Germany).

FIG. 3 is a schematic illustration of an implementation of a power control system comprising a frequency converter, according to some embodiments. FIG. 3 illustrates an implementation using an A/C motor 210 coupled to a sink/source 350 via a frequency converter 240 comprising two or more frequency converters 242 and 244. A PCS may comprise two or more frequency converters (*e.g.,* as in FIG. 3). A PCS may comprise two or more power converters (*e.g.,* as in FIG. 5).

The use of two or more discrete frequency converters (and/or power converters) may offer advantages in some implementations. In some cases, the power needed to "spin up" a turbine (*e.g.,* during startup) is less than that generated by the turbine during operation. In such cases, "splitting" the frequency conversion into "input" and "output" stages may reduce cost. In FIG. 3, a smaller (*e.g.,* lower cost) frequency converter 242 may be used to control power being sent to motor 210, and a larger frequency converter 244 may be used to control power being sent to sink/source 350. To reduce cost, a maximum power capacity of frequency converter 242 may be less than, including less than 50%, preferably less than 20%, including less than 10%, including less than 5%, of that of frequency converter 244. In an exemplary implementation, frequency converter 242 has a maximum power capacity of less than 100 kW, including less than 50 kW, preferably less than 20 kW, preferably not greater than 10 kW, and the frequency converter 244 has a maximum power capacity that is at least 100 kW, preferably at least 300 kW, preferably at least 600 kW, preferably at least 800 kW.

FIG. 4 is a schematic illustration of an implementation of a power control system comprising two frequency converters, according to some embodiments. FIG. 4 illustrates a frequency converter 240 that controls power flowing between an A/C motor 210 and a sink/source 450 comprising a D/C line. In this example, frequency converter 240 comprises a first frequency converter 242 and a second frequency converter 244.

FIG. 5 is a schematic illustration of an implementation of a power control system comprising a D/C motor, according to some embodiments. In this example, power converter 240' controls power flow between D/C motor 210' and sink/source 350 (and by extension, controls the speed of turbine 140). In this example, power converter 240' includes two or more power converters 242' and 244'). The relative power handling capacities of power converters 242' and 244' may be similar to those of frequency converters 242 and 244.

FIG. 6 illustrates a method for spinning up a turbine, according to some embodiments. Method 600 may be used prior to initiating the flow of stock from the headbox, such that the turbine is already spinning at (or close to) a desired speed when water strikes the turbine. Spinning up the turbine may reduce wear and/or reduce the likelihood of damage during startup. In some embodiments, a method described herein is implemented using a controller 230.

In step 610, a desired turbine speed is received (*e.g.,* representing a tangential velocity determined by that of the forming roll). In step 620, power is sent to the motor. In step 630, data comprising the measured speed of the turbine are received. In step 640, the measured and desired speed values are compared to a tolerance (*e.g.,* quantifying an acceptable difference between these speeds). If the speed is too slow, power sent to the turbine may be increased (step 642) to speed up the turbine. Speeding up the turbine may comprise increasing the frequency of the motor. If the speed is too fast, power sent to the turbine may be decreased (step 644) to slow down the turbine. Slowing down the turbine may comprise decreasing the frequency of the motor. In step 650 (when the speed is acceptable) a startup instruction is sent, which may initiate startup of the headbox injection.

In some (*e.g.,* low cost) implementations, apparatus 200 does not have a sensor. The turbine may be spun up without sensor input (*e.g.,* by sending a fixed amount of power, a fixed frequency (Hz), and/or sending power for a fixed amount of time) prior to starting the headbox.

FIG. 7 illustrates a method for controlling a turbine, according to some embodiments. Method 700 may be used to control the speed of the turbine (*e.g.,* during papermaking). Various methods described herein may be implemented with PCS 220. In step 710, a desired turbine speed is determined (*e.g.,* received from a database). In step 720, data comprising the turbine speed are received (*e.g.,* from a sensor). In step 730, the measured and desired speeds are compared, and a difference is determined.

If the turbine is spinning too slowly, power sent from the turbine to the sink/source may be decreased (step 732) decreasing the load on the turbine. In some embodiments, power is decreased by changing frequency (*e.g.,* increasing frequency, depending upon where the turbine speed is on its efficiency curve with respect to the incoming water). If the turbine is spinning too quickly, power sent from the turbine to the sink/source may be increased (step 734) increasing the load on the turbine. In some embodiments, power is increased by changing frequency (*e.g.,* decreasing frequency). Data may optionally be stored in step 740.

It may be advantageous to control the motor to operate at its most efficient rpm. In some embodiments, PCS 220 is configured to control the speed of the motor such that the difference between the measured speed of the turbine and the desired speed of the turbine (and/or motor) is within 50%, including within 20%, including within 10%, including within 5%, including within 1%, including within 0.5% of the desired speed of the turbine (or motor). Controller 230 may be configured to control the motor using closed loop control (*e.g.,* based on data from a sensor 221, FIG. 1), and may be further configured with executable instructions to perform a method for proportional, integral, derivative (PID) control.

FIG. 8 illustrates a method for adjusting a turbine to reduce vibration, according to some embodiments. Method 800 may be used when a vibration is detected (*e.g.,* from a vibration sensor). Reducing and/or eliminating vibration may reduce the wear and/or damage to various components. In step 810, a vibration tolerance is determined (*e.g.,* selected from a database). A vibration tolerance may comprise an acceptable level of measured vibration. In step 820, measured vibration data are received. In step 830, the measured vibration data are compared to the vibration tolerance. If the vibration is within tolerance (*e.g.,* the magnitude of the measured vibration is smaller than that of the tolerance) the data may optionally be stored (step 850). If the vibration is out of tolerance (*e.g.,* the magnitude of the measured vibration is larger than that of the tolerance) the power flow from the motor to the sink/source may be adjusted (step 840). In some embodiments, the speed of the motor may be increased in response to vibration (*e.g.,* increasing frequency to reduce the amount of power sent to the sink/source). In some cases, vibration adjustment may entail operating a turbine at an rpm that is outside the "preferred" rpm in order to reduce the likelihood of damage.

FIG. 9 is a schematic illustration of a controller, according to some embodiments. In some embodiments, controller 230 may be integrated with a frequency converter. In some cases, controller 230 may be a separate component. In FIG. 9, controller 230 comprises a processor 910, memory 920, storage 930, input/output interface 940, communications network interface 950, and display interface 960, some of which (*e.g.,* display interface 960) may be optional in some implementations. These components communicate with each other via a system bus 970, and with the outside world via a communication bus 980.

Processor 910 may be configured to execute instructions. In some embodiments, processor 910 comprises integrated circuits or any processor capable of processing the executable instructions, and may include a cache, a multi-core processor, a video processor, and/or other processors.

Memory 920 may include any memory configured to store data. An example of memory 920 includes a computer readable storage medium, which may include any medium configured to store executable instructions. For example, the memory 920 may include, but is not limited to, storage devices such as RAM, ROM, MRAM, flash memory, and/or memory.

Storage 930 may comprise a computer-readable, non-transitory storage medium configured to store executable instructions (*e.g.,* code) for use by processor 910, such as a hard drive, an optical drive, flash memory, and/or magnetic tape. Storage 930 may include a database or other data structure configured to hold and organize data. In some embodiments, controller 230 includes memory 220 in the form of RAM and storage 230 in the form of flash memory.

Input and output (I/O) may be implemented via I/O interface 940, which may include hardware and/or software to interface with various remotely located devices such as other parts of papermachine 100 (FIG. 1). I/O interface 940 may interact with a local keyboard, mouse, pointer, touchscreen and the like.

Communication network interface 950 may communicate with various devices, and may support serial, parallel, USB, firewire, Ethernet, PLC, and/or ATA communications. Communication network interface 950 may also support 802.11, 802.16, GSM, CDMA, EDGE and various other wireless communications protocols.

Display interface 960 may include any circuitry used to control and/or communicate with a display device, such as an LED display, an OLED display, a plasma display, and the like. In some configurations, display interface 960 includes a video card and memory.

The functionality of various components may include the use of executable instructions, which may be stored in computer readable storage media (*e.g.,* memory and/or storage). In some embodiments, executable instructions may be stored "permanently" in storage 930 for retrieval and storage in memory 920 for use by processor 910. Executable instructions may be retrieved and executed by processor 910 to perform one or more methods.

Embodiments described herein may be implemented with various different forming section configurations (*e.g.,* a crescent former, a DCT forming section as provided by Valmet AB, a twin wire former, and the like). Various apparatus may be included as part of a papermaking machine. An energy recovery apparatus may be retrofitted to an already-existing papermaking machine.

Embodiments need not incorporate all, or even a plurality of, features described herein. Various features described herein may be implemented independently and/or in combination with each other. An explicit combination of features does not preclude the omission of any of these features from other embodiments.

The entirety of this description, including figures and abstract, is copyright protected, Valmet AB, Karlstad, Sweden.

The above description is illustrative and not restrictive. Many variations of the invention will become apparent to those of skill in the art upon review of this disclosure. The scope of the invention should, therefore, be determined not with reference to the above description, but instead should be determined with reference to the appended claims along with their full scope of equivalents.

## Claims

1. An apparatus (200, 200', 200") for recovering energy from a papermaking machine (100), the papermaking machine comprising a forming wire loop (130) driven around a lead roll (120), a fabric loop (132) driven around a forming roll (110), and a headbox (101) configured to inject a stock (108) into a moving sandwich created by the forming wire and fabric loops, the apparatus comprising:
a turbine (140) coupled to an electrical motor (210, 210'), the motor configured to:
at a first time, drive the turbine using electrical power; and
at a second time, be driven by the turbine to generate electrical power;
a sensor (221) configured to determine a speed of the turbine;
an electrical sink/source (250, 350, 450); and
a power control system (PCS) (220) coupled to the sink/source, the sensor and the motor, the PCS configured to control the speed of the turbine by regulating a flow of electrical power between the sink/source and the motor.

2. The apparatus of claim 1, wherein:
at the first time, the PCS sends power from the sink/source to the motor; and
at the second time, the PCS sends power generated by the motor to the sink/source.

3. The apparatus of either of claims 1 and 2, wherein the PCS comprises at least one of:
a frequency converter (240) that controls the speed of the turbine by changing a frequency of the electrical power flowing between the sink/source and the motor; and
a power converter (240') that controls the speed of the turbine by controlling electrical power flowing between the sink/source and the motor.

4. The apparatus of any of claims 1-3, wherein the PCS comprises at least one frequency converter (240) that controls the speed of the turbine by changing a frequency of electrical power flowing between the sink/source and the motor, the frequency converter comprising:
a first frequency converter (242) configured to send power from the sink/source to the motor; and
a second frequency converter (244) configured to send power from the motor to the sink/source.

5. The apparatus of claim 4, wherein a maximum power capacity of the first frequency converter is less than that of the second frequency converter, preferably less than 50, preferably less than 20%, preferably less than 10%, preferably less than 5%, of that of the second frequency converter.

6. The apparatus of either of claims 4 and 5, wherein the first frequency converter has a maximum power capacity of less than 100 kW, preferably less than 50 kW, preferably less than 20 kW, preferably not greater than 10 kW, and the second frequency converter has a maximum power capacity that is at least 100 kW, preferably at least 300 kW, preferably at least 600 kW, preferably at least 800 kW.

7. The apparatus of any of claims 1-3, wherein the PCS comprises at least one power converter (240') that controls the speed of the turbine by changing the electrical power flowing between the sink/source and the motor, the power converter comprising:
a first power converter (242') configured to send power from the sink/source to the motor; and
a second power converter (244') configured to send power from the motor to the sink/source.

8. The apparatus of any of claims 1-7, wherein the PCS comprises a controller (230) configured to control the speed of the turbine, preferably using closed loop control comprising the sensor, such that the turbine operates at a desired number of rotations per minute (rpm), preferably wherein a tolerance on the controlled rpm is below 10%, preferably below 5%, preferably below 3%, preferably below 1%, preferably below 0.5%, preferably below 0.1% of the desired rpm.

9. The apparatus of any of claims 1-8, further comprising a forming roll sensor (221') configured to sense a speed of the forming roll, and wherein the PCS is further configured to control the speed of the turbine in relation to the speed of the forming roll.

10. The apparatus of any of claims 1-9, further comprising a vibration sensor (222), preferably an accelerometer, configured to sense a vibration of the turbine, wherein the PCS is further configured to adjust the speed of the turbine in response to data received from the vibration sensor.

11. A papermaking machine comprising:
a forming wire loop (130) configured to be driven around a lead roll (120), a fabric loop (132) configured to be driven around a forming roll (110), and a headbox (101) configured to inject a stock (108) into a sandwich created by the forming wire and fabric loops; and
an apparatus (200, 200', 200") for recovering energy according to any of claims 1 to 10.

12. A method for operating a papermaking machine (100) and an apparatus (200, 200', 200") for recovering energy from the papermaking machine, the papermaking machine comprising:
a forming wire loop (130) configured to be driven around a lead roll (120),
a fabric loop (132) configured to be driven around a forming roll (110), and
a headbox (101) configured to inject a stock (108) into a sandwich created by the forming wire and fabric loops;
the apparatus (200, 200', 200") for recovering energy from the papermaking machine comprising:
a turbine (140) coupled to an electrical motor (210, 210'), the motor configured to:
at a first time, drive the turbine using electrical power; and
at a second time, be driven by the turbine to generate electrical power;
a sensor (221') configured to sense a speed of the turbine;
an electrical sink/source (250, 350, 450); and
a power control system (PCS) (220) coupled to the sink/source, the sensor and the motor, the PCS configured to control the speed of the turbine by regulating a flow of electrical power between the sink/source and the motor;
the method comprising:
receiving desired speed data comprising a desired speed of the turbine;
receiving measured speed data comprising a measured speed of the turbine;
calculating a difference between the measured and desired speed data; and
controlling a flow of electrical power between the sink/source and the motor in response to the calculated difference, particularly wherein controlling comprises controlling a frequency conversion of the electrical power between a first frequency of the motor and a second frequency of the sink/source.

13. The method of claim 12, wherein the desired speed of the turbine comprises a desired tangential velocity (140') of the turbine.

14. The method of claim 13, wherein the desired tangential velocity (140') of the turbine is between 20% and 70%, preferably between 30% and 60%, preferably between 40% and 50%, preferably between 44% and 49%, preferably at least 46% and not greater than 48%, of at least one of:
a tangential velocity (110') of the forming roll; and
a jet velocity (109) of the stock (108) injected by the headbox (101).

15. The method of any of claims 12-14, wherein, at the first time, a flow of stock (108) from headbox (101) has not started, and the method further comprises sending an instruction to initiate the flow of stock when the difference between the measured and desired speed data is below a startup threshold.

## Patentansprüche

1. Vorrichtung (200, 200', 200") zur Energierückgewinnung von einer Papierherstellungsmaschine (100), wobei die Papierherstellungsmaschine eine Formdrahtschlaufe (130), die um eine Führungsrolle (120) angetrieben wird, eine Gewebeschlaufe (132), die um eine Formrolle (110) angetrieben wird, und einen Stoffauflauf (101) umfasst, der konfiguriert ist, ein Material (108) in einen sich bewegenden Sandwichzwischenraum, der durch die Formdraht- und die Gewebeschlaufe geschaffen wird, einzuspeisen, wobei die Vorrichtung umfasst:
eine Turbine (140), die an einen Elektromotor (210, 210') gekoppelt ist, wobei der Motor konfiguriert ist:
zu einer ersten Zeit, die Turbine unter Verwendung elektrischen Stroms anzutreiben; und
zu einer zweiten Zeit, durch die Turbine angetrieben zu werden, um elektrischen Strom zu erzeugen;
einen Sensor (221), der konfiguriert ist, eine Geschwindigkeit der Turbine zu bestimmen;
eine elektrische Senke/Quelle (250, 350, 450); und
ein Stromsteuerungssystem (PCS) (220), das an die Senke/Quelle, den Sensor und den Motor gekoppelt ist, wobei das PCS konfiguriert ist, die Geschwindigkeit der Turbine durch Regulieren eines Flusses elektrischen Stroms zwischen der Senke/Quelle und dem Motor zu steuern.

2. Vorrichtung nach Anspruch 1, wobei
zu der ersten Zeit, das PCS Strom von der Senke/Quelle zu dem Motor schickt; und
zu der zweiten Zeit, das PCS durch den Motor erzeugten Strom zu der Senke/Quelle schickt.

3. Vorrichtung nach einem der Ansprüche 1 und 2, wobei das PCS mindestens eines umfasst aus:
einem Frequenzwandler (240), der die Geschwindigkeit der Turbine durch Ändern einer Frequenz des elektrischen Stroms, der zwischen der Senke/Quelle und dem Motor fließt, steuert; und
einem Leistungswandler (240'), der die Geschwindigkeit der Turbine durch Steuern elektrischen Stroms, der zwischen der Senke/Quelle und dem Motor fließt, steuert.

4. Vorrichtung nach einem der Ansprüche 1-3, wobei das PCS mindestens einen Frequenzwandler (240) umfasst, der die Geschwindigkeit der Turbine durch Ändern einer Frequenz des elektrischen Stroms, der zwischen der Senke/Quelle und dem Motor fließt, steuert, wobei der Frequenzwandler umfasst:
einen ersten Frequenzwandler (242), der konfiguriert ist, Strom von der Senke/Quelle zu dem Motor zu schicken; und
einen zweiten Frequenzwandler (244), der konfiguriert ist, Strom von dem Motor zu der Senke/Quelle zu schicken.

5. Vorrichtung nach Anspruch 4, wobei eine maximale Leistungskapazität des ersten Frequenzwandlers kleiner ist als diejenige des zweiten Frequenzwandlers, bevorzugt kleiner als 50, bevorzugt kleiner als 20%, bevorzugt kleiner als 10%, bevorzugt kleiner als 5%, derjenigen des zweiten Frequenzwandlers.

6. Vorrichtung nach einem der Ansprüche 4 und 5, wobei der erste Frequenzwandler eine maximale Leistungskapazität kleiner als 100 kW, bevorzugt kleiner als 50 kW, bevorzugt kleiner als 20 kW, bevorzugt nicht größer als 10 kW, aufweist, und wobei der zweite Frequenzwandler eine maximale Leistungskapazität aufweist, die mindestens 100 kW, bevorzugt mindestens 300 kW, bevorzugt mindestens 600 kW, bevorzugt mindestens 800 kW, beträgt.

7. Vorrichtung nach einem der Ansprüche 1-3, wobei das PCS mindestens einen Leistungswandler (240') umfasst, der die Geschwindigkeit der Turbine durch Ändern des elektrischen Stroms, der zwischen der Senke/Quelle und dem Motor fließt, steuert, wobei der Leistungswandler umfasst:
einen ersten Leistungswandler (242'), der konfiguriert ist, Strom von der Senke/Quelle zu dem Motor zu schicken; und
einen zweiten Leistungswandler (244'), der konfiguriert ist, Strom von dem Motor zu der Senke/Quelle schicken.

8. Vorrichtung nach einem der Ansprüche 1-7, wobei das PCS eine Steuerung (230) umfasst, die konfiguriert ist, die Geschwindigkeit der Turbine zu steuern, bevorzugt unter Verwendung eines geschlossenen Regelkreises, der den Sensor umfasst, so dass die Turbine bei einer gewünschten Umdrehungszahl pro Minute (rpm) arbeitet, wobei bevorzugt eine Toleranz der gesteuerten rpm unter 10%, bevorzugt unter 5%, bevorzugt unter 3%, bevorzugt unter 1%, bevorzugt unter 0,5%, bevorzugt unter 0,1%, der gewünschten rpm liegt.

9. Vorrichtung nach einem der Ansprüche 1-8, weiterhin umfassend einen Formrollensensor (221'), der konfiguriert ist, eine Geschwindigkeit der Formrolle zu erfassen, und wobei das PCS weiterhin konfiguriert ist, die Geschwindigkeit der Turbine in Relation zu der Geschwindigkeit der Formrolle zu steuern.

10. Vorrichtung nach einem der Ansprüche 1-9, weiterhin umfassend einen Vibrationssensor (222), bevorzugt einen Beschleunigungsmesser, der konfiguriert ist, eine Vibration der Turbine zu erfassen, wobei das PCS weiterhin konfiguriert ist, die Geschwindigkeit der Turbine als Reaktion auf von dem Vibrationssensor erhaltene Daten anzupassen.

11. Papierherstellungsmaschine umfassend:
eine Formdrahtschlaufe (130), die konfiguriert ist, um eine Führungsrolle (120) angetrieben zu werden, eine Gewebeschlaufe (132), die konfiguriert ist, um eine Formrolle (110) angetrieben zu werden, und einen Stoffauflauf (101), der konfiguriert ist, ein Material (108) in einen Sandwichzwischenraum, der durch die Formdraht- und die Gewebeschlaufe geschaffen wird, einzuspeisen; und
eine Vorrichtung (200, 200', 200") zur Energierückgewinnung gemäß einem der Ansprüche 1 bis 10.

12. Verfahren zum Betreiben einer Papierherstellungsmaschine (100) und einer Vorrichtung (200, 200', 200") zur Energierückgewinnung von einer Papierherstellungsmaschine, wobei die Papierherstellungsmaschine umfasst:
eine Formdrahtschlaufe (130), die konfiguriert ist, um eine Führungsrolle (120) angetrieben zu werden,
eine Gewebeschlaufe (132), die konfiguriert ist, um eine Formrolle (110) angetrieben zu werden, und
einen Stoffauflauf (101), der konfiguriert ist, ein Material (108) in einen Sandwichzwischenraum, der durch die Formdraht- und die Gewebeschlaufe
geschaffen wird, einzuspeisen;
wobei die Vorrichtung (200, 200', 200") zur Energierückgewinnung von einer Papierherstellungsmaschine umfasst:
eine Turbine (140), die an einen Elektromotor (210, 210') gekoppelt ist, wobei der Motor konfiguriert ist:
zu einer ersten Zeit, die Turbine unter Verwendung elektrischen Stroms anzutreiben; und
zu einer zweiten Zeit, durch die Turbine angetrieben zu werden, um elektrischen Strom zu erzeugen;
einen Sensor (221'), der konfiguriert ist, eine Geschwindigkeit der Turbine zu erfassen;
eine elektrische Senke/Quelle (250, 350, 450); und
ein Stromsteuerungssystem (PCS) (220), das an die Senke/Quelle, den Sensor und den Motor gekoppelt ist, wobei das PCS konfiguriert ist, die Geschwindigkeit der Turbine durch Regulieren eins Flusses elektrischen Stroms zwischen der
Senke/Quelle und dem Motor zu steuern;
wobei das Verfahren umfasst:
Erhalten gewünschter Geschwindigkeitsdaten, die eine gewünschte Geschwindigkeit der Turbine umfassen;
Erhalten gemessener Geschwindigkeitsdaten, die eine gemessene Geschwindigkeit der Turbine umfassen;
Berechnen einer Differenz zwischen den gemessenen und den gewünschten Geschwindigkeitsdaten; und
Steuern eines Flusses elektrischen Stroms zwischen der Senke/Quelle und dem Motor als Reaktion auf die berechnete Differenz, wobei Steuern insbesondere Steuern einer Frequenzumwandlung des elektrischen Stroms zwischen einer ersten Frequenz des Motors und einer zweiten Frequenz der Senke/Quelle umfasst.

13. Verfahren nach Anspruch 12, wobei die gewünschte Geschwindigkeit der Turbine eine gewünschte Tangentialgeschwindigkeit (140') der Turbine umfasst.

14. Verfahren nach Anspruch 13, wobei die gewünschte Tangentialgeschwindigkeit (140') der Turbine zwischen 20% und 70%, bevorzugt zwischen 30% und 60%, bevorzugt zwischen 40% und 50%, bevorzugt zwischen 44% und 49%, bevorzugt mindestens 46% und nicht größer als 48%, von mindestens einem ist aus:
einer Tangentialgeschwindigkeit (110') der Formrolle; und
einer Strahlgeschwindigkeit (109) des durch den Stoffauflauf (101) eingespeisten Materials (108).

15. Verfahren nach einem der Ansprüche 12-14, wobei, zu der ersten Zeit, ein Fluss von Material (108) von dem Stoffauflauf (101) nicht gestartet ist, und das Verfahren weiterhin Schicken einer Anweisung den Fluss von Material zu beginnen umfasst, wenn die Differenz zwischen den gemessenen und den gewünschten Geschwindigkeitsdaten unter einer Startschwelle liegt.

## Revendications

1. Un appareil (200, 200', 200") pour récupérer de l'énergie d'une machine (100) à fabriquer du papier, la machine à fabriquer du papier comprenant une boucle de formage (130) en fil entraînée autour d'un rouleau de tête (120), une boucle en tissu (132) entraînée autour d'un rouleau de formage (110) et un boîtier de tête (101) configuré pour injecter une matière stockée (108) dans un sandwich en mouvement créé par la boucle de formage en fil et la boucle en tissu, l'appareil comprenant :
une turbine (140) reliée à un moteur électrique (210, 210'), le moteur étant configuré pour :
sur un premier temps, entraîner la turbine en utilisant l'énergie électrique ; et
sur un deuxième temps, être entraîné par la turbine pour générer de l'énergie électrique ;
un capteur (221) configuré pour déterminer une vitesse de la turbine ;
une réserve / source électrique (250, 350, 450) ; et
un système de commande de puissance (PCS) (220) relié à la réserve / source, au capteur et au moteur, le PCS étant configuré pour commander la vitesse de la turbine en régulant un flux d'énergie électrique entre la réserve / source et le moteur.

2. L'appareil selon la revendication 1, dans lequel :
en un premier temps, le PCS envoie de l'énergie de la réserve / source au moteur ; et
en un deuxième temps, le PCS envoie l'énergie générée par le moteur à la réserve / source.

3. L'appareil selon l'une quelconque des revendications 1 ou 2, dans lequel le PCS comprend au moins l'un des éléments suivants :
un convertisseur de fréquence (240) qui commande la vitesse de la turbine en changeant une fréquence de l'énergie électrique circulant entre la réserve / source et le moteur ; et
un convertisseur de puissance (240') qui commande la vitesse de la turbine en commandant l'énergie électrique circulant entre la réserve / source et le moteur.

4. L'appareil selon l'une quelconque des revendications 1 à 3, dans lequel le PCS comprend au moins un convertisseur de fréquence (240) qui commande la vitesse de la turbine en modifiant une fréquence de l'énergie électrique s'écoulant entre la réserve / source et le moteur, le convertisseur de fréquence comprenant :
un premier convertisseur de fréquence (242) configuré pour envoyer de l'énergie de la réserve / source au moteur ; et
un deuxième convertisseur de fréquence (244) configuré pour envoyer de l'énergie du moteur à la réserve / source.

5. L'appareil selon la revendication 4, dans lequel une capacité de puissance maximale du premier convertisseur de fréquence est inférieure à celle du deuxième convertisseur de fréquence, de préférence inférieure à 50%, de préférence inférieure à 20%, de préférence inférieure à 10%, de préférence inférieure à 5%, de celle du deuxième convertisseur de fréquence.

6. L'appareil selon l'une quelconque des revendications 4 ou 5, dans lequel le premier convertisseur de fréquence a une capacité de puissance maximale inférieure à 100 kW, de préférence inférieure à 50 kW, de préférence inférieure à 20 kW, de préférence pas supérieure à 10 kW, et le deuxième convertisseur de fréquence a une capacité de puissance maximale qui est d'au moins 100 kW, de préférence d'au moins 300 kW, de préférence d'au moins 600 kW, de préférence d'au moins 800 kW.

7. L'appareil selon l'une quelconque des revendications 1 à 3, dans lequel le PCS comprend au moins un convertisseur de puissance (240') qui commande la vitesse de la turbine en modifiant l'énergie électrique circulant entre la réserve / source et le moteur, le convertisseur de puissance comprenant :
un premier convertisseur de puissance (242') configuré pour envoyer de l'énergie de la réserve / source vers le moteur ; et
un deuxième convertisseur de puissance (244') configuré pour envoyer de l'énergie du moteur vers la réserve / source.

8. L'appareil selon l'une quelconque des revendications 1 à 7, dans lequel le PCS comprend un contrôleur (230) configuré pour commander la vitesse de la turbine, de préférence en utilisant une commande en boucle fermée comprenant le capteur, de sorte que la turbine fonctionne à un nombre souhaité de tours par minute (tr / min), de préférence avec une tolérance sur les tr / min commandés inférieure à 10%, de préférence inférieure à 5%, de préférence inférieure à 3%, de préférence inférieure à 1%, de préférence inférieure à 0,5%, de préférence inférieure à 0,1% du régime recherché.

9. L'appareil selon l'une quelconque des revendications 1 à 8, comprenant en outre un capteur (221') de rouleau de formage configuré pour détecter une vitesse du rouleau de formage, et le PCS est en outre configuré pour commander la vitesse de la turbine en relation avec la vitesse du rouleau de formage.

10. L'appareil selon l'une quelconque des revendications 1 à 9, comprenant en outre un capteur de vibrations (222), de préférence un accéléromètre, configuré pour détecter une vibration de la turbine, le PCS étant en outre configuré pour régler la vitesse de la turbine en réponse à des données reçues du capteur de vibration.

11. Une machine à fabriquer du papier comprenant :
une boucle de formage (130) en fil configurée pour être entraînée autour d'un rouleau de tête (120), une boucle en tissu (132) configurée pour être entraînée autour d'un rouleau de formage (110) et un boîtier de tête (101) configuré pour injecter une matière stockée (108) dans un sandwich créé par la boucle de formage en fil et la boucle en tissu ; et
un appareil (200 200', 200") pour récupérer de l'énergie selon l'une quelconque des revendications 1 à 10.

12. Un procédé pour faire fonctionner une machine (100) à fabriquer du papier et un appareil (200, 200', 200") pour récupérer de l'énergie provenant de la machine à fabriquer du papier, la machine à fabriquer du papier comprenant :
une boucle de formage (130) en fil configurée pour être entraînée autour d'un rouleau de tête (120),
une boucle en tissu (132) configurée pour être entraînée autour d'un rouleau de formage (110) et
un boîtier de tête (101) configuré pour injecter une matière stockée (108) dans un sandwich créé par la boucle de formage en fil et la boucle en tissu ;
l'appareil (200 200, 200") pour récupérer de l'énergie provenant de la machine à fabriquer du papier comprenant :
une turbine (140) reliée à un moteur électrique (210, 210'), le moteur étant configuré pour :
en un premier temps, entraîner la turbine en utilisant l'énergie électrique ; et
en un deuxième temps, être entraîné par la turbine pour générer de l'énergie électrique ;
un capteur (221') configuré pour détecter une vitesse de la turbine ;
une réserve / source électrique (250, 350, 450) ; et
un système de commande de puissance (PCS) (220) relié à la réserve / source, au capteur et au moteur, le PCS étant configuré pour commander la vitesse de la turbine en régulant un flux d'énergie électrique entre la réserve / source et le moteur ;
le procédé comprenant :
le fait de recevoir des données de vitesse souhaitée comprenant une vitesse souhaitée de la turbine ;
le fait de recevoir des données de vitesse mesurée comprenant une vitesse mesurée de la turbine ;
le fait de calculer une différence entre les données de vitesse mesurée et souhaitée ; et
le fait de commander un flux d'énergie électrique entre la réserve / source et le moteur en réponse à la différence calculée, ce fait de commander comprenant en particulier le fait de commander une conversion de fréquence de l'énergie électrique entre une première fréquence du moteur et une deuxième fréquence de la réserve / source.

13. Le procédé selon la revendication 12, dans lequel la vitesse souhaitée de la turbine comprend une vélocité tangentielle (140') souhaitée de la turbine.

14. Le procédé selon la revendication 13, dans lequel la vélocité tangentielle (140') souhaitée de la turbine est comprise entre 20% et 70%, de préférence entre 30% et 60%, de préférence entre 40% et 50%, de préférence entre 44% et 49 %, de préférence est d'au moins 46% sans être supérieure à 48%, d'au moins un parmi :
une vitesse tangentielle (110') du rouleau de formage ; et
une vitesse de jet (109) de ma matière stockée (108) injectée par le boîtier de tête (101).

15. Le procédé selon l'une quelconque des revendications 12 à 14, dans lequel, durant le premier temps, un flux de matière stockée (108) provenant du boîtier de tête (101) n'a pas débuté, et le procédé comprend en outre le fait d'envoyer une instruction pour déclencher l'écoulement de la matière stockée lorsque la différence entre les données de vitesse mesurée et souhaitée est inférieure à un seuil de démarrage.
